# EUROPÄISCHE PATENTSCHRIFT

(11) **EP 2 886 474 B1**
(45) Veröffentlichungstag und Bekanntmachung des Hinweises auf die Patenterteilung: **03.08.2016**
(21) Anmeldenummer: 14168456.3
(22) Anmeldetag: 15.05.2014
(51) Int. Cl.: B65B 67/12, B65B 9/18, B65B 31/02, B65B 9/15, B25J 21/02

(54) **Vorrichtung zum kontaminationsfreien Verpacken von Produkten in Schlauchbeuteln sowie Verwendung der Vorrichtung**
Device for contamination-free packing of products in tubular bags, and use of the device
Dispositif d'emballage sans contamination de produits dans des sacs tubulaires et utilisation du dispositif

(30) Priorität: 20.12.2013 DE 202013105859 U
(43) Veröffentlichungstag der Anmeldung: 24.06.2015
(73) Patentinhaber: Keuchel, Josef, 86929 Penzing/Oberbergen (DE)
(72) Erfinder: Keuchel, Josef, 86929 Penzing/Oberbergen (DE)
(74) Vertreter: Lichtnecker, Markus Christoph

(56) Entgegenhaltungen:
- WO-A1-2009/138328
- WO-A1-2010/145042

## Beschreibung

### I. Anwendungsgebiet

Die Erfindung betrifft eine Verpackungs-Vorrichtung sowie deren Verwendung.

### II. Technischer Hintergrund

Das Abpacken von Produkten in Schlauchbeuteln ist in der industriellen Fertigung häufig eingesetzt. Dabei fallen die Produkte - meist nacheinander - in einen unten geschlossenen Folienschlauch, der dahinter, also darüber, durch eine Quernaht abgesiegelt und ggf. abgetrennt wird.

Wenn dagegen Produkte in kleinen Stückzahlen oder gar einzeln hergestellt und auf diese Art und Weise abgepackt werden sollen, ist eine weniger aufwändige und damit auch kostengünstigere Vorrichtung notwendig. Durch zusätzliche Randbedingungen können weitere Probleme hinzukommen, beispielsweise wenn das Produkt kontaminationsfrei hergestellt und in Schlauchbeuteln abgepackt werden soll. Dies ist beispielsweise bei Infusionsbeuteln für die medizinische Behandlung, insbesondere Chemotherapien bei Krebsbehandlungen, der Fall: Da der Inhalt dieser Infusionsbeutel teilweise hoch toxisch ist, ist es so gut wie unvermeidbar, dass auch die Außenseite der Infusionsbeutel teilweise noch damit benetzt ist und somit toxisch ist.

Aus diesem Grund werden die Infusionsbeutel in einem dicht geschlossenen, umgebenden Schlauchbeutel abgepackt und gelagert sowie transportiert. Erst unmittelbar bei der Behandlung wird der Infusionsbeutel entweder aus dem umgebenden Schlauchbeutel entnommen oder zusammen mit dem umgebenden Schlauchbeutel am Infusionsständer aufgehängt, und nur die Zugänge zu den beiden Injektions-Ports des Infusionsbeutel geöffnet.

Derartige Infusionsbeutel werden gefüllt und verschlossen:
- Entweder in sog. Isolatoren, die einen dichten Arbeitsraum besitzen, dessen Atmosphäre ständig abgesaugt, gefiltert und im gefilterten Zustand in den Innenraum des Isolators wieder zugeführt wird, wobei im Inneren des Isolatoren ein Unterdruck von mindestens **80** Pa aufrechterhalten wird. Deshalb muss die Umgebung des Isolatoren lediglich der Reinheitsstufe D entsprechen. Der PTA greift durch dicht ans Gehäuse des Isolators angeschlossene Arbeitshandschuhe in den Innenraum des Isolators und führt auf diese Art und Weise darin die nötigen Arbeitsschritte durch.
- Oder durch sog. Sicherheits-Werkbänke, bei denen die Vorderseite des Arbeitsraumes zwar offen ist so dass im Inneren Umgebungsdruck herrscht, aber die dort eintretende Luft ständig und sofort nach unten und/oder oben abgesaugt, gefiltert und erst danach dem Arbeitsraum wieder zugeführt wird, sodass auf diese Art und Weise eine nicht kontaminierte Atmosphäre in dem Innenraum der Sicherheits-Werkbank gehalten werden soll. Der Bediener kann hier problemlos durch die offene Vorderseite in den Innenraum der Sicherheits-Werkbank hineingreifen und dort die notwendigen Schritte zum z.B. Befüllen und Verschließen solcher Infusionsbeutel durchführen. Die Umgebung der Sicherheits-Werkbank muss der Reinheitsstufe B entsprechen.

Da auf diese Art und Weise gefüllte Infusionsbeutel hergestellt werden, die auf der Außenseite bereits relativ wenige Kontaminierungen aufweisen, soll unmittelbar anschließend das Abpacken dieser Infusionsbeutel in einem umgebenden Schlauchbeutel ohne zwischenzeitliche weitere Kontaminierung der Außenseite des Infusionsbeutels erfolgen. Zu diesem Zweck ist an die - in der Regel in einer Seitenwand des Isolators oder der Sicherheitswerkbank angeordnete - Übergabeöffnung eine Vorrichtung zum kontaminationsfreien Verpacken der gefüllten Infusionsbeutel in umgebenden Schlauchbeuteln angeordnet.

Zu diesem Zweck besitzt die auf der Außenseite der Übergabeöffnung angebaute Vorrichtung eine Durchgangsröhre, die schräg nach unten gerichtet ist, sodass das am höheren Ende in die Übergabeöffnung eingegebene Produkt, z.B. der Infusionsbeutel, entlang dieser Durchgangsröhre nach unten in den am Ende geschlossenen Schlauch für die Schlauchbeutelerzeugung fällt und in eine dahinter anschließend angeordnete Siegelstation eingelegt und dicht versiegelt werden kann.

Im Verlauf der Durchgangsröhre ist ein Schlauchmagazin angeordnet.

Dabei treten mehrere Probleme auf:
Zum einen herrscht in der Durchgangsröhre der gleiche Druck wie in dem damit strömungstechnisch verbundenen Innenraum des Isolators oder der Sicherheitswerkbank mit der Folge, dass der in der Durchgangsröhre vorhandene Schlauch für den Schlauchbeutel aufgrund des Unterdrucks zusammengezogen wird und das Produkt - vor allem wenn es sich um kleine und leichte Produkte handelt - nicht bis zum geschlossenen Ende des Beutelschlauches weiterrutscht.

Des Weiteren muss dafür Sorge getragen werden, dass der zum Herstellen der Schlauchbeutel benutzte Schlauch aus Kunststofffolie nicht unnötig kontaminiert wird, also in dem Bereich, in dem die Schlauchkassette sich befindet, also im Innenraum der Vorrichtung, die gleiche kontaminationsfreie Atmosphäre erzeugt wird oder vorliegt wie im Innenraum des vorgelagerten Isolators oder der Sicherheitswerkbank.

WO 2010/145042 A1 offenbart eine Abpack-Vorrichtung gemäß dem Oberbegriff des Anspruchs 1.

WO 2009/138328 A1 betrifft eine Befüllungsvorrichtung, bei der eine geschlossene Handhabung der Produkte gewähreistet ist. Ein Endloshüllmittel umschließt hierbei einen Produktanschluss, wird jedoch nicht innerhalb dieses Produktanschlusses geführt.

### III. Darstellung der Erfindung

### a) Technische Aufgabe

Es ist daher die Aufgabe gemäß der Erfindung, eine Vorrichtung zum Abpacken von Produkten in Schlauchbeuteln zu schaffen, die trotz einfachem Aufbau diese Nachteile vermeidet und sowohl an einem Isolator als auch an einer Sicherheitswerkbank angeordnet und betrieben werden kann.

### b) Lösung der Aufgabe

Diese Aufgabe wird durch die Merkmale der Ansprüche **1, 12** und **13** gelöst. Vorteilhafte Ausführungsformen ergeben sich aus den Unteransprüchen.

Die Durchgangsröhre der Abpack-Vorrichtung besteht teilweise aus der Umlenkhülse der Schlauchkassette, auf deren Außenumfang der zusammengeschobene Schlauch bevorratet wird und durch deren Innenumfang - also nach Umlenkung des Schlauches um das stirnseitige Ende der Umlenkhülse herum - das Abzugsende des Schlauches verläuft, dessen vorderes Ende verschlossen ist.

Ein Produkt, das in die Durchgangsröhre vom Isolator oder der Sicherheitswerkbank aus eingeworfen wird, gelangt - bei Abwärtsneigung der Durchgangsröhre schwerkraftbedingt - in das geschlossene Abzugsende des Schlauches, und kann durch Herstellen einer Quernaht hinter dem Produkt in dem Schlauch dicht eingesiegelt werden.

Durch die Umlenkung des Schlauchendes beim Abziehen von dem bevorrateten Schlauch ist die benötigte Kraft zum weiteren Herausziehen des Schlauchendes aus der Abpackvorrichtung so groß, dass allein durch das Einwerfen eines Produktes keine unerwünschte große Länge des Abzugsendes vom bevorrateten Schlauch abgezogen wird.

An dieser Stelle sei erwähnt, dass unter einer Umlenkhülse oder hülsenförmig im Sinne des Patentes nicht zwingend eine umfänglich geschlossene Hülse zu verstehen ist, sondern auch eine in Umfangsrichtung unterbrochene Hülse, wie etwa nebeneinander beabstandete Segmente, zueinander entlang des Umfanges beabstandete Stangen entlang der Mantellinien der Hülse oder Ähnliches dienen kann, sofern es dazu geeignet ist, auf dem Außenumfang den zusammengefalteten Schlauch zu führen und das Abzugsende über das stirnseitige Ende einer solchen Umlenkhülse umzulenken.

Für das bessere Umlenken des Abzugsendes ist auf dem freien, eintrittsseitigen stirnseitigen Ende der Umlenkhülse ein (durchgehender oder auch unterbrochener) Umlenkring aufgebracht, der einen Querschnitt besitzt, der größer ist als die Wandstärke der Umlenkhülse und dessen Außenumfang vorzugsweise gerundet ist, sodass das darum umgelenkte Abzugsende des Schlauches auch bei starkem Zug am Schlauch nicht beschädigt wird.

Das austrittsseitige stirnseitige Ende der Umlenkhülse ist dagegen mit dem Gehäuse, nämlich der Austrittsseite des Gehäuses, verbunden, insbesondere mit dem als Deckel ausgebildeten öffnungsfähigen Teil des Gehäuses.

In einer bevorzugten Ausführungsform umfasst die Abpackvorrichtung zusätzlich eine Kassettenabdeckung, die die Schlauchkassette abdeckt:
Die Kassettenabdeckung besteht aus einer hülsenförmigen Außenabdeckung und einer konzentrisch darin angeordneten hülsenförmigen Innenabdeckung, die auf der Eintrittsseite über einen gemeinsamen Stirnring miteinander verbunden sind.

Diese Kassettenabdeckung, und insbesondere der radiale Abstand zwischen Innenabdeckung und Außenabdeckung, ist so bemessen, dass er von der Eintrittsseite her über die gefüllte Schlauchkassette, also die Umlenkhülse samt daran befindlichem Schlauch, gestülpt werden kann und danach die Außenabdeckung der Kassettenabdeckung den zusammengefalteten Schlauch außen umgibt und die Innenabdeckung konzentrisch im Inneren des Abzugsendes des Schlauches liegt, und somit ein radiales Gegeneinanderziehen der Wandungen des Abzugsendes des Schlauches zu der Mitte, also dessen Axialrichtung hin, verhindert.

Diese Kassettenabdeckung wird vorzugsweise dann eingesetzt, wenn im Inneren der Schlauchkassette und damit im Inneren des Abzugsendes ein Unterdruck herrscht, beispielsweise weil die Abpackvorrichtung an einem Isolator angebaut ist und an diesem betrieben wird, in dessen Innenraum ja ebenfalls ein ständiger Unterdruck aufrechterhalten wird.

Indem die Außenabdeckung mit ihrem austrittsseitigen Ende lösbar, vorzugsweise jedoch dicht, an der Innenseite des Gehäuses, beispielsweise dem aufklappbaren Deckel des Gehäuses, befestigbar ist, wird zusätzlich der diese Kassettenabdeckung umgebende Teil des Innenraums der Abpackvorrichtung gegenüber dem Inneren der Schlauchkassette und damit auch dem Inneren des Abzugsendes des Schlauches abgedichtet. Dazu ist es notwendig, dass auch das eintrittsseitige stirnseitige Ende der Kassettenabdeckung, vorzugsweise der Stirnring, dicht entweder an dem im Gehäuse fest montierten Teil der Durchgangsröhre anliegt oder direkt an der Übergabeöffnung in der Wand des Isolators.

Zu diesem Zweck besteht der Stirnring vorzugsweise aus einem elastischen, beispielsweise gummiartigen, Material.

Dafür ist es dann nötig, dass zumindest die Außenabdeckung als ringförmig geschlossene Rohrhülse ausgebildet ist, insbesondere auch die Innenabdeckung.

Die Kassettenabdeckung ist mit dem austrittsseitigen Ende ihrer Außenabdeckung ebenfalls mit der Innenseite des Gehäuses, vorzugsweise dem als Deckel zu öffnenden Teil des Gehäuses, verbunden, und leicht zu demontieren, denn nach Aufklappen des Deckels muss ja die Kassettenabdeckung von der Schlauchkassette abgezogen werden, um die Schlauchkassette mit einem neuen Schlauch zu befüllen.

Das austrittsseitige Ende der Innenabdeckung endet frei auslaufend, da ja zwischen dieser Innenabdeckung und der Umlenkhülse der Schlauch frei auslaufen können muss.

Die Umlenkhülse oder bei vorhandener Kassettenabdeckung die hülsenförmige, konzentrisch innerhalb der Umlenkhülse liegende Innenabdeckung der Kassettenabdeckung können insgesamt die Durchgangsröhre bilden, oder der eintrittsseitige Teil der Durchgangsröhre ist ein fest im Gehäuse montiertes Teil, an dessen austrittsseitiges Ende sich die Schlauchkassette gegebenenfalls mit darauf aufgesetzter Kassettenabdeckung anschließt. Dies ist vorteilhaft wegen der notwendigen Neigung und damit dem schrägen Ansatz der Durchgangsröhre an der vertikalen Wand des Isolators oder der Sicherheitswerkbank, denn dadurch ist es möglich, die Umlenkhülse und/oder die Kassettenabdeckung als ausschließlich zylindrische Teile, also mit Stirnflächen lotrecht zu deren Axialrichtung, herzustellen, was weniger Aufwand als bei schrägem Abschluss bedeutet.

Die Eintrittsseite des Gehäuses der Abpackvorrichtung ist vorzugsweise direkt als Flansch ausgebildet, der entsprechende Befestigungsvorrichtungen, insbesondere Schraublöcher, aufweist zum Verschrauben an der Außenseite des Isolators oder einer Sicherheitswerkbank.

Der Deckel verschließt dicht gegenüber dem Bauteil, an dem er anliegt, sei es dem Rest des Gehäuses der Abpackvorrichtung oder auch - falls der Deckel teilweise direkt an der Außenseite des Isolators oder der Sicherheitswerkbank anliegt - der Außenseite des Isolators oder der Sicherheitswerkbank.

Auf diese Art und Weise kann die Abpackvorrichtung zur Verwendung wahlweise an einem Isolator, in dem Unterdruck herrscht, als auch an einer Sicherheitswerkbank, in der Umgebungsdruck herrscht, betrieben werden ohne die Nachteile des Standes der Technik, nämlich vor allem unterdruckbedingtes Zusammenziehen der Schlauchwandung, zu bewirken, wenn folgendes eingehalten wird:
- im Fall eines vorgelagerten Isolators wird die Kassettenabdeckung dicht am festen Teil der Durchgangsröhre oder an der Eintrittsöffnung des Gehäuses angelegt wird und der Innenraum der Abpackvorrichtung, also der Raum um die Kassettenabdeckung herum, ständig entlüftet, wobei die dorthin nachströmende Außenluft gefiltert wird. Dadurch wird eine Kontamination des in diesem Teil des Innenraums gelagerten Schlauches auf seiner Außenseite verhindert oder zumindest minimiert. Zusätzlich wird dadurch in diesem Teil des Innenraums ebenfalls ein ständiger Unterdruck vorgehalten, der in etwa dem Unterdruck im Inneren der Durchgangsröhre entspricht, so dass bereits aus diesem Grund das Abzugsende des Schlauches weniger zu einem Zusammenziehen neigt.
- im Fall einer vorgelagerten Sicherheitswerkbank, in der ja Umgebungsdruck herrscht, wird dagegen der Innenraum der Abpackvorrichtung lediglich in strömungstechnischer Verbindung mit dem Innenraum der Sicherheitswerkbank gehalten, und deshalb auch die Luft aus dem Innenraum der Abpackvorrichtung ebenso wie die aus der Sicherheitswerkbank von dort aus ständig abgesaugt und gefiltert, so dass auf diese Art und Weise eine zusätzliche Kontamination des bevorrateten Schlauches auf dessen Außenseite und auch Innenseite vermieden wird.

Wenn die Umlenkhülse an dem Deckel des Gehäuses der Abpackvorrichtung befestigt ist, wird zum Neubefüllen der Schlauchkassette der Deckel geöffnet und ein neuer Schlauch auf die Umlenkhülse aufgeschoben.

Falls die Schlauchkassette von einer Kassettenabdeckung umgeben ist, was primär bei der Verwendung an einem Isolator der Fall ist, muss zusätzlich vorher die Kassettenabdeckung abgezogen werden.

Die jeweils benötigte Form der Abpackvorrichtung kann somit auf sehr einfache Art und Weise aus einem Bausatz mit nur wenigen verschiedenen Einzelteilen hergestellt werden:
Denn je nachdem, ob eine Abpackvorrichtung mit oder ohne Kassettenabdeckung benötigt wird, ändert sich auch die Gestalt des Gehäuses und gegebenenfalls die Tatsache, ob im Gehäuse ein fester Teil der Durchgangsröhre vorhanden ist.

Ein entsprechender Bausatz umfasst somit vorzugsweise diese beiden unterschiedlichen Formen des Gehäuses jeweils mit dem zugehörigen, dazu passenden Deckel, während die Schlauchkassette immer die gleiche sein kann und in nur einer Bauform vorliegen muss.

Darüber hinaus umfasst der Bausatz auch das eventuell benötigte feste Teil der Durchgangsröhre, und ebenso die wahlweise benötigte Kassettenabdeckung.

### c) Ausführungsbeispiele

Ausführungsformen gemäß der Erfindung sind im Folgenden beispielhaft näher beschrieben. Es zeigen:

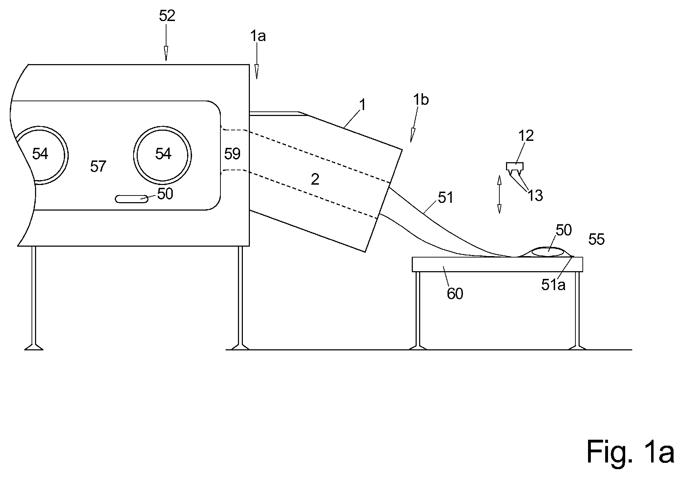

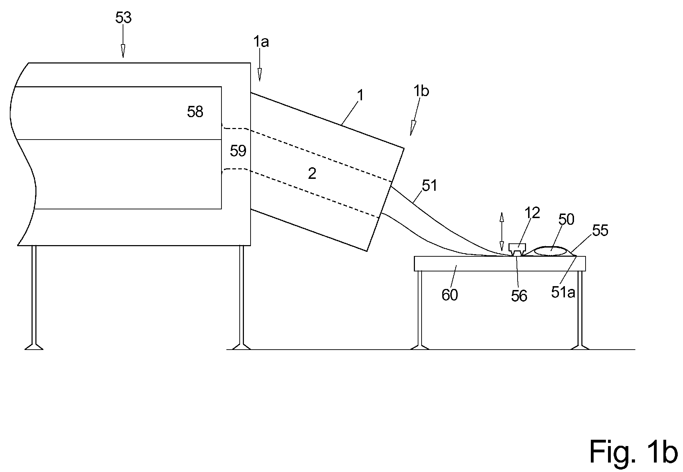

- Figur **1**a:: die Abpackvorrichtung, angebaut an einen Isolator,
- Figur **1**b:: die Abpackvorrichtung, angebaut an eine Sicherheits-Werkbank,
- Figur **2**a:: die Abpackvorrichtung gemäß Figur **1**b im vergrößerten Längsschnitt, im geschlossenen Zustand,

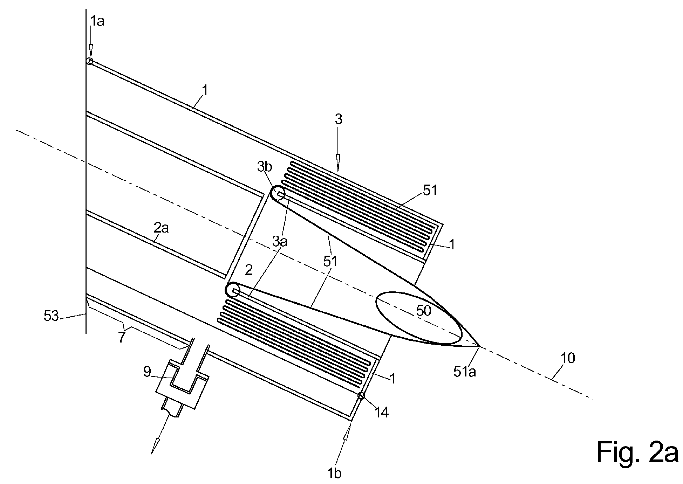

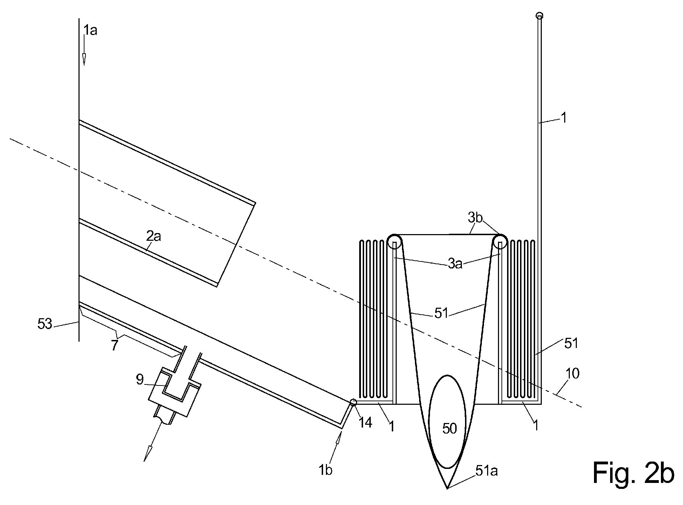

- Figur **2**b:: die Abpackvorrichtung in der Ansicht der Figur **2**a im aufgeklappten Zustand,

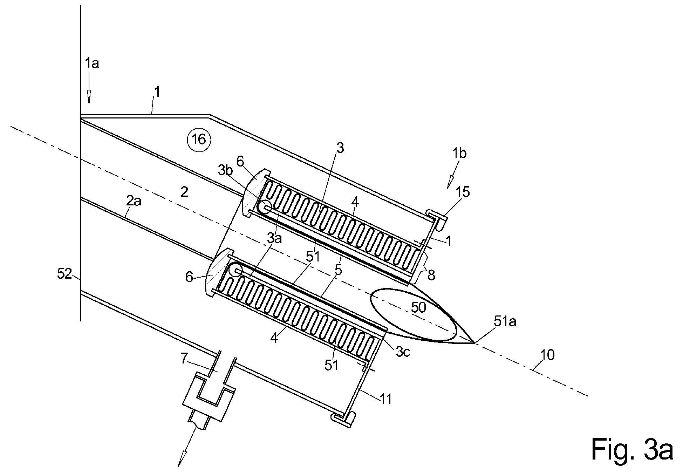

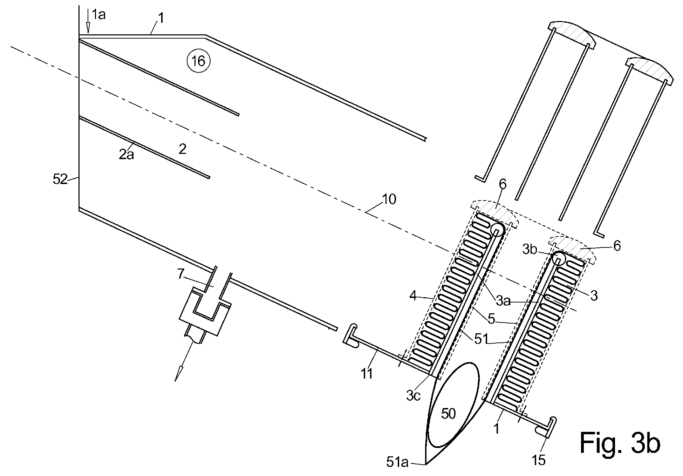

- Figur **3**a:: die Abpackvorrichtung gemäß Figur **1**a im vergrößerten Längsschnitt, im geschlossenen Zustand und
- Figur **3**b:: die Abpackvorrichtung in der Ansicht der Figur **3**a mit geöffnetem Deckel und abgenommener Schlauchkassette.

In **Figur 1a** ist die erfindungsgemäße Abpackvorrichtung **1** seitlich an die Auswurfsöffnung **59** eines sogenannten Isolators **52** angebaut, in dem in einer keimarmen Umgebung ein Produkt **50**, in diesem Fall ein beispielsweise mit einem toxischen Inhalt gefüllter Infusionsbeutel, hergestellt wird. Zu diesem Zweck ist der kastenförmige Isolator **52** im Wesentlichen hermetisch geschlossen, und der vor dem Isolator stehende Bediener blickt durch die frontseitige Glasscheibe **57** in den Arbeitsraum im Inneren des Isolators, wo er beispielsweise den gewünschten Infusionsbeutel mit der toxischen Flüssigkeit füllt. Zu diesem Zweck sind an die Eingriffsöffnungen **54** in der Glasscheibe **57** nicht dargestellte, in den Arbeitsraum ragende Handschuhe dicht angeschlossen, in die der Bediener seine Hände steckt und mit denen er dann im Arbeitsraum hantieren kann.

Um das Innere des Isolators möglichst keimfrei zu halten, wird aus dem Arbeitsraum des Isolators **52** ständig Luft abgesaugt und gleichzeitig über Keimfilter geleitete Nachführungsluft in den Arbeitsraum eingeführt, jedoch nur in einer solchen Menge, dass im Isolator **52** ständig Unterdruck herrscht.

Die Auswurföffnung **59** kann permanent offen sein oder durch eine vom Bediener steuerbare Verschlussklappe wahlweise verschlossen oder geöffnet sein.

Die Abpackvorrichtung besitzt eine Durchgangsröhre **2** von der Eintrittsseite **1**a zur Austrittsseite **1**b und diese ist fluchtend an der Auswurfsöffnung **59** mit der Eintrittsseite **1**a ihrer Durchgangsröhre **2** angeordnet.

Im Inneren der Abpackvorrichtung befindet sich eine Schlauchkassette **3** mit einem Schlauch **51** aus Kunststoffmaterial, dessen vorderes, geschlossenes Ende **51**a aus der Austrittsseite **1**b der Abpack-Vorrichtung zumindest etwas vorsteht - wie in den Figuren **2**a, **3**a dargestellt. Da die Durchgangsröhre **2** von der Auswurfsöffnung **59** aus schräg nach unten verläuft, rutschen die vom Bediener in die Auswurföffnung **59** eingelegten Produkte **50** schwerkraftbedingt von selbst in Richtung des austrittsseitigen Endes der Durchgangsröhre **2** und damit in das geschlossene Ende des Schlauches **51**.

Der Bediener zieht daraufhin das geschlossene Ende **51**a des Schlauches **51** weiter aus der Abpackvorrichtung heraus, und legt es auf den Tisch **60** einer Schweißvorrichtung in einer solchen Position ab, dass er den Schlauch **51** hinter dem Produkt **50** mittels einer Schweißleiste **12** mit einer Quernaht **56** dicht absiegeln kann. In diesem Fall besitzt die Schweißleiste **12** zwei nebeneinander liegende, beabstandete Schweißkanten **13**, wodurch eine doppelte Quernaht **56** erzeugt wird, um die aufeinander folgenden Schlauchbeutel **55** zwischen den beiden Nähten der Doppelnaht abzutrennen und dadurch die einzelnen Schlauchbeutel **55** zu separieren.

In **Figur 1a** ist die Schweißleiste **12** in der deaktivierten, angehobenen Stellung dargestellt, in **Figur 1b** in der abgesenkten Schweißstellung, in der sie gegen den Tisch **60** drückt.

**Figur 1b** unterscheidet sich von der Figur **1**a dadurch, dass dort die Abpackvorrichtung an einer sogenannte Sicherheits-Werkbank **53** angeordnet ist, analog wiederum mit ihrer Durchgangsröhre **2** fluchtend anschließend an die seitliche Auswurföffnung **59** der Sicherheits-Werkbank **53**.

Im Gegensatz zu einem Isolator ist der Arbeitsraum einer Sicherheits-Werkbank **53** nicht vollständig hermetisch, insbesondere nicht nach vorne, geschlossen, sondern mit einer Frontklappe **58** ausgestattet, die vom Bediener teilweise oder ganz geschlossen werden kann. Um im Arbeitsraum zu arbeiten, lässt er die Frontklappe **58** wenigstens zum Teil offen und schafft sich dadurch eine Durchgriffsöffnung, um im Arbeitsraum zu arbeiten.

Somit herrscht im Arbeitsraum der Sicherheits-Werkbank **53** Umgebungsdruck.

Dementsprechend ist die Luft im Arbeitsraum der Sicherheits-Werkbank natürlich nicht keimfrei, aber in dem die durch die frontseitige Öffnung einströmende Umgebungsluft ständig nach oben und hinten aus dem Arbeitsraum abgesaugt wird, wird vermieden, dass der vor der Sicherheits-Werkbank **53** stehende Bediener mit toxischen Stoffen aus dem Arbeitsraum in Kontakt gerät.

Wie sich die Abpackvorrichtung vom konstruktiven Aufbau und in diesem Fall auch von der Gehäuseform her unterscheiden - bedingt durch den im Isolator herrschenden Unterdruck einerseits und den in der Sicherheits-Werkbank herrschenden Umgebungsdruck andererseits - ist in den Figuren **2**a, b, **3**a, b im Detail dargestellt:
In den **Figuren 2a****, b** ist die Abpackvorrichtung in der Variante für die Verwendung an einer Sicherheitswerkbank **53** dargestellt, in der Umgebungsdruck herrscht.

Die Abpackvorrichtung der Figur 2a ist - bis auf den schrägen Ansatz des Gehäuses 1 an der Sicherheits-Werkbank 53 - rotationssymmetrisch um die axiale Richtung 10, die Verlaufsrichtung der Durchgangsröhre 2 der Abpackvorrichtung ausgebildet.

Die Abpackvorrichtung besitzt ein beispielsweise zylindrisches Gehäuse 1, welches an der Eintrittsseite 1a vollständig offen ist und an der Seitenwand der Sicherheitswerkbank 53 befestigt ist oder zumindest anliegt.

Am Austritt ist im Gehäuse 1 eine zentrale Auslassöffnung vorhanden, durch die der im Inneren des Gehäuses 1 in einer Schlauchkassette 3 bevorratete Schlauch 51 mit seinem vorderen, geschlossenen Ende 51 a, herausgezogen werden kann, indem sich dann das abzupackende Produkt 50 befindet.

Die Schlauchkassette 3 umfasst eine vorzugsweise zylindrische Umlenkhülse 3a, die mit ihrem austrittsseitigen Ende an der Innenseite der austrittsseitigen Stirnfläche des Gehäuses 1 befestigt ist und in Richtung Eintrittsseite in das Gehäuse 1 hinein vorsteht.

An dem eintrittsseitigen Ende der Umlenkhülse 3a ist auf dieser ein Umlenkring 3b befestigt, meist aufgesteckt, wobei der Materialdurchmesser des Umlenkringes 3b größer ist als die Wandstärke der Umlenkhülse 3a. Denn außerhalb der Umlenkhülse 3a befindet sich der bevorratete Schlauch 51, in diesem Fall gefaltet in vielen, radial aufeinander liegenden Schichten von Schlauchmaterial, deren axiale Erstreckung gleich groß oder etwas geringer ist als die axiale Erstreckung der Umlenkhülse 3a. Das abzugsseitige vordere, geschlossene Ende des Schlauches 51 wird also von dem Raum außerhalb der Umlenkhülse über deren eintrittsseitige freie Stirnseite und den dortigen Umlenkring 3b herumgeführt und im Inneren der Umlenkhülse 3a Richtung Austrittsende 1 b der Abpackvorrichtung und aus dieser herausgeführt. Da die Umlenkhülse 3a nicht ganz bis zur Seitenwand der Sicherheits-Werkbank 53 heranreicht, ist von knapp vor Beginn der Umlenkhülse 3a im Gehäuse 1 zentral um die axiale Richtung 10 herum ein im Gehäuse 1 fest montiertes Teil 2a der Durchgangsröhre 2 vorhanden. Im weiteren Verlauf wird die Durchgangsröhre 2 durch die Umlenkhülse 3a und den darin geführten Schlauch 51 gebildet.

Da in der Sicherheits-Werkbank 53 Umgebungsdruck herrscht, liegt auch im Inneren der strömungstechnisch damit verbundenen Abpackvorrichtung Umgebungsdruck vor. Dadurch kann es nicht vorkommen, dass im Inneren der Umlenkhülse 3a der dort geführte Schlauch 51 mit seinen Wandungen gegeneinander gezogen wird und das Produkt 50 nicht bis zum geschlossenen Ende 51 a vorwärts rutschen kann.

Damit der Schlauch 51 und der später abgetrennte Schlauchbeutel 55 auf der Außenseite nicht unnötig kontaminiert wird, wird über einen Unterdruckanschluss 7 im Gehäuse 1 die Luft aus dem Inneren des Gehäuses 1 im Betrieb der Abpackvorrichtung ständig abgesaugt und über einen Filter 9 geführt, bevor sie in die Umgebung entlassen wird.

Der obere Teil des Gehäuses 1 einschließlich der austrittsseitigen Öffnung ist gegenüber dem unteren Teil des Gehäuses über ein Scharnier 14, welches quer zur Axialrichtung in der austrittsseitigen Stirnfläche des Gehäuses 1 verläuft, aufklappbar. Im geschlossenen Zustand des Gehäuses 1 gemäß Figur 2a liegt der bewegliche Teil des Gehäuses mit seiner eintrittsseitigen Stirnkante, die mit einem Gummirand ausgestattet sein kann, an der Außenseite der Seitenwand der Sicherheits-Werkbank 53 an.

Figur 2b zeigt im Gegensatz zu 2a den beweglichen Teil des Gehäuses 1 im aufgeklappten Zustand, in dem sich auch die Schlauchkassette 3 samt Umlenkhülse 3a mit Umlenkring 3b befindet. In diesem aufgeklappten Zustand kann ein neuer Schlauch 51 auf die Umlenkhülse 3a aufgeschoben werden.

Figur 3a zeigt eine Abpackvorrichtung, angebaut an der Seitenwand eines Isolators, in dessen inneren Arbeitsraum während des Betriebes Unterdruck herrscht.

In der Schlauchkassette 3 der Figur 3a ist zunächst erkennbar, dass dort der Schlauch 51 nicht in radial aufeinanderfolgenden Lagen, sondern in axial aufeinander folgenden Lagen gefaltet bevorratet ist.

In welcher Form der bevorratete Schlauch 51 gefaltet ist, ist jedoch für die Erfindung prinzipiell unerheblich und insbesondere unabhängig davon, ob die Abpackvorrichtung an einem Isolator oder einer Sicherheits-Werkbank 53 betrieben wird.

Des Weiteren ist in Figur 3a das Gehäuse anders aufgebaut: Die an der Austrittsseite 1 b angeordnete Stirnwand des Gehäuses 1 ist als abklappbarer oder vollständig abnehmbarer Deckel 11 ausgebildet, der über einen oder mehrere Spannverschlüsse 15 dicht an der Stirnfläche des festen Gehäuseteiles fixierbar ist.

Auch die Form und Unterteilung des Gehäuses in einen festen und einen lösbaren oder aufklappbaren Teil ist nicht davon abhängig, ob die Abpackvorrichtung an einem Isolator 52 oder einer Sicherheits-Werkbank 53 betrieben wird.

Sehr wohl davon abhängig ist jedoch der wesentliche Unterschied der Figur 3a gegenüber Figur 2a in Form der in Figur 3a zusätzlich enthaltenen Kassettenabdeckung, bestehend aus einer hülsenförmigen Außenabdeckung 4, die außerhalb der Schlauchkassette 3 liegt und einer hülsenförmigen Innenabdeckung 5, die innerhalb nicht nur der Schlauchkassette 3 und der Umlenkhülse 3a, sondern auch innerhalb des im Inneren der Umlenkhülse 3a geführten Schlauches 51 liegt.

Beide sind an ihrem eintrittsseitigen, in Figur 3a linken, Ende über einen ebenfalls konzentrisch zur axialen Richtung 10 liegenden Stirnring 6 miteinander verbunden und bilden gemeinsam die Kassettenabdeckung, welche - bei aufgeklapptem Gehäuse 1, wie in Figur 3b dargestellt - über die Schlauchkassette 3 gestülpt werden kann und mit dem austrittsseitigen Ende der Außenabdeckung 4 an der Innenseite der Stirnfläche des Gehäuses - und falls dieser als Deckel 11 ausgebildet ist, am Deckel 11 - befestigt werden kann.

Im fertig montierten und geschlossenen Zustand des Gehäuses liegt dabei der Stirnring 6 an dem fest angeordneten Teil 2a der Durchgangsröhre 2 der Abpackvorrichtung an, wobei das Innere der Durchgangsröhre 2 mit dem inneren Arbeitsraum des Isolators 52 in Verbindung steht und im Inneren der Durchgangsröhre 2 somit Unterdruck herrscht.

Dennoch wird der im Inneren der Umlenkhülse 3a geführte Schlauch mit seinen Wandabschnitten nicht zentral nach innen gegeneinander gesaugt, da dies durch die Innenabdeckung 5 verhindert wird.

Da der Durchmesser der Innenabdeckung 5 kleiner ist als derjenige der Umlenkhülse 3a, besteht an der Austrittsseite 1 b zwischen beiden ein Ringspalt, aus dem der Schlauch 51 nach außen treten kann, da die Stirnfläche des Gehäuses 1 - gegebenenfalls ausgebildet als Deckel 11 - radial nach innen nur bis zu der Umlenkhülse 3a oder knapp darüber hinaus reicht.

In dem die Durchgangsröhre 2 umgebenden Innenraum des Gehäuses 1 wird die Luft - wie anhand der Figuren 3a, b beschrieben - während des Betriebes der Abpackvorrichtung über einen Unterdruckanschluss 7 ebenfalls permanent abgesaugt und erst nach einer Filterung in die Umgebung entlassen. Da dieser Raum jedoch nicht mit dem Isolator 52 strömungstechnisch in Verbindung steht, ist im Gehäuse 1 zusätzlich ein Lufteinlass 16 angeordnet, dem ein nicht dargestellter Filter vorgeschaltet ist, um in der Umgebungsluft enthaltene Keime vor Eintritt in die Abpackvorrichtung nach Möglichkeit in dem Filter zurück zu halten.

Um einen neuen Schlauch 51 einzusetzen, wird das Gehäuse 1 geöffnet, also beispielsweise gemäß Figur 3b der abklappbare Deckel 11 herabgeklappt oder ganz entfernt, und anschließend die Kassettenabdeckung, bestehend aus Außenabdeckung 4, Innenabdeckung 5 und verbindendem Stirnring 6, abgezogen, sodass nun ein neuer Schlauch 51 über die Umlenkhülse 3a gestülpt werden kann.

Nach Herausziehen des geschlossenen Endes 51 a des Schlauches 51 aus dem Inneren der Umlenkhülse 3a kann die Kassettenabdeckung wieder über die Kassette gestülpt und das Gehäuse geschlossen werden.

Das Gehäuse 1 ist in Figur 3a nicht zylindrisch, sondern weist in der linken Hälfte einen Knick auf.

Dennoch kann für beide Varianten der Abpackvorrichtung, also mit oder ohne Kassettenabdeckung 4, 5, 6, die gleiche Gehäuseform gewählt werden, oder es werden gerade zur Unterscheidung dieser beiden Varianten bewusst zwei optisch einfach unterscheidbare Gehäuseformen verwendet. Für die Funktion beider Varianten der Abpackvorrichtung ist dies jedoch nicht notwendig.

### BEZUGSZEICHENLISTE

- **1**: Gehäuse
- **1**a: Eintrittsseite
- **1**b: Austrittsseite
- **2**: Durchgangsröhre
- **2**a: fest angeordnetes Teil
- **3**: Schlauchkassette
- **3**a: Umlenkhülse
- **3**b: Umlenkring
- **3**c: Stirnseite
- **4**: Außenabdeckung
- **5**: Innenabdeckung
- **6**: Stirnring
- **7**: Unterdruckanschluss
- **8**: Abstand
- **9**: Filter
- **10**: axiale Richtung
- **11**: Deckel
- **12**: Schweißleiste
- **13**: Schweißkante
- **14**: Scharnier
- **15**: Spannverschluss
- **16**: Lufteinlass

- **50**: Produkt
- **51**: Schlauch
- **51**a: geschlossenes Ende
- **52**: Isolator
- **53**: Sicherheits-Werkbank
- **54**: Eingriffsöffnung
- **55**: Schlauchbeutel
- **56**: Quernaht
- **57**: Glasscheibe
- **58**: Frontklappe
- **59**: Auswurf-Öffnung
- **60**: Tisch

## Patentansprüche

1. Abpack-Vorrichtung zum sterilen Verpacken von Produkten, insbesondere Infusionsbeuteln, in Schlauchbeuteln, beispielsweise für den Anbau an einen Isolator oder eine Sicherheitswerkbank, mit
- einem Gehäuse (1),
- welches eine Durchgangsröhre (2) für die Produkte (50) von seiner Eintrittsseite (1a) zur gegenüberliegenden Austrittsseite (1 b) aufweist,
- einer Schlauchkassette (3), die wenigstens einen Teil der Durchgangsröhre (2) bildet, wobei
die Schlauchkassette (3) eine Umlenkhülse (3a) umfasst, die einen zusammengeschobenen Schlauch (51) um ihren Außenumfang herum aufnehmen kann und das Abzugsende (51 a) des Schlauches (51) in ihrem Innenumfang aufnehmen kann,
**dadurch gekennzeichnet, dass**
die Umlenkhülse (3a) an dem austrittsseitigen, stirnseitigen Ende mit dem Gehäuse (1) verbunden, insbesondere dicht verbunden, ist.

2. Abpack-Vorrichtung nach Anspruch 1,
**dadurch gekennzeichnet, dass**
auf dem freien eintrittsseitigen, stirnseitigen Ende der Umlenkhülse (3a) ein Umlenkring (3b) aufgebracht ist, der insbesondere einen gerundeten Querschnitt aufweist.

3. Abpack-Vorrichtung nach Anspruch 2,
**dadurch gekennzeichnet, dass**
der Umlenkring (3b) aufsteckbar ausgebildet ist, insbesondere wobei der Material-durchmesser des Umlenkrings (3b) größer ist als die Wandstärke der Umlenkhülse (3a).

4. Abpack-Vorrichtung nach einem der vorhergehenden Ansprüche, **dadurch gekennzeichnet, dass**
die Abpack-Vorrichtung als Kassetten-Abdeckung eine hülsenförmige Außenabdeckung (4) und eine mit einem insbesondere konzentrischen Abstand (8) darin angeordnete hülsenförmige Innenabdeckung (5) umfasst, die über einen gemeinsamen Stirnring (6) miteinander verbunden sind.

5. Abpack-Vorrichtung nach Anspruch 4,
**dadurch gekennzeichnet, dass**
der Stirnring (6) aus elastischem, beispielsweise gummiartigem, Material besteht.

6. Abpack-Vorrichtung nach Anspruch 4 oder 5,
**dadurch gekennzeichnet, dass**
- die Schlauchkassette (3) und insbesondere die Abmessungen von deren Umlenkring (3b) so dimensioniert sind, dass sie im Abstand (8) zwischen der Außenabdeckung (4) und der Innenabdeckung (5) aufnehmbar ist, und/oder
- die Außenabdeckung (4) und/oder die Innenabdeckung (5) als Rohrhülse ausgebildet sind.

7. Abpack-Vorrichtung nach einem der vorhergehenden Ansprüche, **dadurch gekennzeichnet, dass**
die Austrittsseite (1 b) des Gehäuses (1) als öffnungsfähiger Deckel (11) ausgebildet ist, an dessen Innenseite wenigstens die Umlenkhülse (3a) mit ihrer austrittsseitigen, stirnseitigen Ende befestigt ist, gegebenenfalls auch die Außenabdeckung (4) lösbar befestigt ist.

8. Abpack-Vorrichtung nach einem der vorhergehenden Ansprüche, **dadurch gekennzeichnet, dass**
ein Teil (2a) der Durchgangsröhre (2) fest im Gehäuse (1) angeordnet ist.

9. Abpack-Vorrichtung nach einem der vorhergehenden Ansprüche, **dadurch gekennzeichnet, dass**
- eine Kassetten-Abdeckung, insbesondere deren Stirnring (6), dicht an dem fest im Gehäuse (1) angeordneten Teil (2a) der Durchgangsröhre (2) oder der Eintrittsöffnung des Gehäuses (1) angeordnet ist, und/oder
- das Gehäuse (1) einen Unterdruckanschluss (7) zum Evakuieren des Innenraumes des Gehäuses (1) und/oder einen Filter (9) in einer Lufteintrittsöffnung aufweist.

10. Abpack-Vorrichtung nach einem der vorhergehenden Ansprüche, **dadurch gekennzeichnet, dass**
die Eintrittsseite (1a) des Gehäuses (1) als Flansch zum Verschrauben an einer Außenseite eines Isolators (52) oder einer Sicherheitswerkbank (53) angeordnet ist.

11. Abpack-Vorrichtung nach einem der vorhergehenden Ansprüche, **dadurch gekennzeichnet, dass**
ein Deckel (11) des Gehäuses (1) im geschlossenen Zustand über eine Dichtung das Gehäuse (1) luftdicht verschließt.

12. Verwendung der Abpack-Vorrichtung nach einem der vorhergehenden Ansprüche zum kontaminationsfreien Verpacken von Produkten (50) in Schlauchbeuteln (55), indem
- das abzupackende Produkt (50) in einem angebauten Isolator (52) oder einer Sicherheitswerkbank (53) fertiggestellt wird,
- vom Bediener vom Inneren des Isolators (52) oder der Sicherheitswerkbank (53) aus in ein verschlossenes Ende des Schlauches (51) in der insbesondere schräg nach unten geneigten Durchgangsröhre (2) der Vorrichtung eingeworfen wird,
- das vordere, verschlossene, Ende des Schlauches (51) mit dem darin befindlichen Produkt (50) aus der Austrittsöffnung der Abpack-Vorrichtung herausgezogen und in eine Schweißeinrichtung (56) eingelegt wird, und
- der Schlauch (51) hinter dem Produkt (50) durch eine Quernaht (56) dicht versiegelt wird und der dicht verschlossene Schlauchbeutel (55) ggf. vom Schlauch (50) abgetrennt wird,
- im Fall eines vorgelagerten Isolators (52) die Kassetten-Abdeckung, insbesondere mit dem Stirnring (6), dicht am festen Teil (2a) der Durchgangsröhre (2) angelegt wird und der Innenraum der Abpack - Vorrichtung (1) ständig entlüftet wird, wobei die in den Innenraum nachströmende Luft gefiltert wird,
- im Fall einer vorgelagerten Sicherheits-Werkbank (53) der Innenraum der Abpack-Vorrichtung (1) in strömungstechnischer Verbindung mit dem Innenraum der Sicherheits-Werkbank (53) gehalten wird,
**dadurch gekennzeichnet, dass**
zum Füllen der Schlauchkassette (3) der Deckel des Gehäuses geöffnet und gegebenenfalls die Kassetten-Abdichtung entfernt wird und anschließend der zusammengefaltete Schlauch (51) über die Umlenkhülse (3a) geschoben wird.

13. Baukasten zum Erstellen einer Abpack-Vorrichtung (1) nach einem der Ansprüche 1 bis 11, mit
- zwei Bauformen des Gehäuses (1),
- je einem dazu passenden Deckel (11),
- einer Schlauchkassette (3) mit einer Umlenkhülse (3a),
- einer Kassetten-Abdeckung.

14. Baukasten nach Anspruch 13,
**dadurch gekennzeichnet, dass**
der Bausatz einen festen Teil (2a) einer Durchgangsröhre (2) umfasst.

## Claims

1. Packaging-device for sterile packaging of products, more particularly infusion bags, in tubular bags, for example for attaching to an isolator or a safety workbench, with
- a housing (1),
- including a through-pipe (2) for the products (50) extending from its entrance side (1 a) to the opposite exit side (1 b),
- a tube cartridge (3) forming at least one part of the through-pipe (2), whereby the tube cartridge (3) comprises a turnaround sleeve (3a), which is able to receive a folded tube (51) around its outer circumference and to receive the extraction end (51 a) of the tube (51) around its inner circumference,
**characterized in that**
the turnaround sleeve (3a) of the exit sided front end is, in particularly densely, linked to the housing (1).

2. Packaging-device according to claim 1,
**characterized in that**
a turnaround ring (3b) is applied on the clear entrance sided front end of the turnaround sleeve (3a), more particularly having a rounded cross section.

3. Packaging-device according to claim 2,
**characterized in that**
the turnaround ring (3b) is pluggable, wherein more particularly the diameter of the material of the turnaround ring (3b) is bigger than the wall thickness of the turnaround sleeve (3a).

4. Packaging-device according to one of the previous claims,
**characterized in that**
the packaging-device comprises a cartridge lid with a sleeve-shaped outer lid (4) and an inside, more particularly in a concentric distance (8), arranged sleeve-shaped inner lid (5), being linked by a joint front ring (6).

5. Packaging-device according to claim 4,
**characterized in that**
the front ring (6) consists of elastic, for example gummy, material.

6. Packaging-device according to claim 4 or 5,
**characterized in that**
- the tube cartridge (3) and particularly the dimensions of its turnaround ring (3b) are dimensioned in a way that it can be received within the distance (8) between the outer lid (4) and the inner lid (5), and/or
- the outer lid (4) and/or the inner lid (5) is configured as a pipe sleeve.

7. Packaging-device according to one of the previous claims,
**characterized in that**
the exit side (1 b) of the housing (1) is configured as an opening lid (11), where at least the turnaround sleeve (3a) is attached with its exit sided, front end on the inner side of the opening lid (10), and where applicable also the outer lid (4) is releasable attached.

8. Packaging-device according to one of the previous claims,
**characterized in that**
a part (2a) of the through-pipe (2) is fixed in the housing (1).

9. Packaging-device according to one of the previous claims,
**characterized in that**
- a cartridge-lid, particularly its front ring (6), is arranged densely at the part (2a) of the through-pipe (2) being fixed in the housing (1) or to the entrance opening of the housing (1), and/or
- the housing (1) having a connection (7) with negative pressure for evacuating the inner room of the housing (1) and/or a filter (9) in an air entrance opening.

10. Packaging-device according to one of the previous claims,
**characterized in that**
the entrance side (1 a) of the housing (1) is arranged as a flange for screwing at an outside of an isolator (52) or a safety workbench (53).

11. Packaging-device according to one of the previous claims,
**characterized in that**
a lid (11) of the housing (1) seals the housing (1) airtight in closed state by a gasket.

12. Use of the packaging-device according to one of the previous claims for contamination-free packaging of products (50) in tubular bags (55), by
- finishing the product (50) to be packaged inside an attached isolator (52) or a safety workbench (53),
- being thrown by an operator from the inside of the isolator (52) or the safety workbench (53) in a sealed end of the tube (51) to the particularly downwards inclined through-pipe (2) of the device,
- pulling the front, sealed end of the tube (51) with the inside arranged product (50) out of the exit port of the packaging-device and inserting in a welding device (56), and
- sealing the tube (51) behind the product (50) densely by a cross-seam (56) and cutting the densely sealed tubular bag (55) off the tube (50) if applicable,
- in case of an upstream isolator (52) the cartridge-lid, particularly with the front ring (6), is attached densely to the fixed part (2a) of the through-pipe (2) and the inner room of the packaging-device (1) is continuously vented, whereby the air flowing into the inner room is filtered,
- in case of an upstream safety workbench (53) the inner room of the packaging-device (1) is held in airstream connection with the inner room of the safety workbench (53),
**characterized in that**
for filling the tube cartridge (3) the lid of the housing is opened and the cartridge-seal removed if applicable and after that the folded tube (51) being pushed over the turnaround sleeve (3a).

13. Construction kit for creating a packaging-device (1) according to one of the claims 1 to 11, with
- two types of the housing (1),
- each having a matching lid (11),
- a tube cartridge (3) with a turnaround sleeve (3a),
- a cartridge-lid.

14. Construction kit according to claim 13,
**characterized in that**
the construction kit comprises a fixed part (2a) of a through-pipe (2).

## Revendications

1. Dispositif d'emballage stérile de produits, en particulier de poches de perfusion, dans des sacs tubulaires, par exemple pour le rattachement à un isolateur ou à une hotte à flux laminaire, comportant
- un boîtier (1),
- qui présente un tube (2) de passage de produits (50) depuis son côté d'entrée (1 a) vers son côté de sortie (1 b) situé à l'opposé,
- une cassette à tuyau (3) qui forme au moins une partie du tube de passage (2), la cassette à tuyau (3) comprenant une douille de renvoi (3a) susceptible de loger autour de son pourtour extérieur un tuyau (51) rétracté et de loger dans son pourtour intérieur l'extrémité d'extraction (51 a) du tuyau (51),
**caractérisé en ce que**
la douille de renvoi (3a) est reliée au boîtier (1), en particulier de façon étanche, par l'extrémité frontale côté sortie.

2. Dispositif d'emballage selon la revendication 1,
**caractérisé en ce que**
à l'extrémité frontale libre côté entrée de la douille de renvoi (3a) est monté un anneau de renvoi (3b) qui présente en particulier une section transversale arrondie.

3. Dispositif d'emballage selon la revendication 2,
**caractérisé en ce que**
l'anneau de renvoi (3b) est de type enfichable, en particulier le diamètre du matériau de l'anneau de renvoi (3b) est supérieur à l'épaisseur de paroi de la douille de renvoi (3a).

4. Dispositif d'emballage selon l'une des revendications précédentes,
**caractérisé en ce que**
le dispositif d'emballage comprend à titre de recouvrement de cassette un recouvrement extérieur (4) en forme de douille et un recouvrement intérieur (5) en forme de douille agencé dans ce dernier à un écart (8) en particulier concentrique, qui sont reliés l'un à l'autre par une bague frontale commune (6).

5. Dispositif d'emballage selon la revendication 4,
**caractérisé en ce que**
la bague frontale (6) est constitué à base d'un matériau élastique, par exemple du type caoutchouc.

6. Dispositif d'emballage selon la revendication 4 ou 5,
**caractérisé en ce que**
- la cassette à tuyau (3) et en particulier les dimensions de son anneau de renvoi (3b) sont dimensionnées de manière à pouvoir être logée dans l'écart (8) entre le recouvrement extérieur (4) et le recouvrement intérieur (5), et/ou
- le recouvrement extérieur (4) et/ou le recouvrement intérieur (5) sont réalisés sous forme de gaine tubulaire.

7. Dispositif d'emballage selon l'une des revendications précédentes,
**caractérisé en ce que**
le côté sortie (1 b) du boîtier (1) est réalisé sous forme de couvercle (11) pouvant être ouvert, sur le côté intérieur duquel est fixée au moins la douille de renvoi (3a) par son extrémité frontale côté sortie, le cas échéant le recouvrement extérieur (4) pouvant également y être fixé de façon amovible.

8. Dispositif d'emballage selon l'une des revendications précédentes,
**caractérisé en ce que**
une partie (2a) du tube de passage (2) est agencée solidairement dans le boîtier (1).

9. Dispositif d'emballage selon l'une des revendications précédentes,
**caractérisé en ce que**
- un recouvrement de cassette, en particulier sa bague frontale (6), est agencé de façon étanche sur la partie (2a) du tube de passage (2) agencée solidairement dans le boîtier (1) ou sur l'ouverture d'entrée du boîtier (1), et/ou
- le boîtier (1) comprend un raccord de dépression (7) pour mettre sous vide l'espace intérieur du boîtier (1), et/ou un filtre (9), dans une ouverture d'entrée d'air.

10. Dispositif d'emballage selon l'une des revendications précédentes, **caractérisé en ce que**
le côté entrée (1a) du boîtier (1) est agencé en tant que bride pour l'assemblage par vissage sur un côté extérieur d'un isolateur (52) ou d'une hotte à flux laminaire (53).

11. Dispositif d'emballage selon l'une des revendications précédentes, **caractérisé en ce que**
un couvercle (11) du boîtier (1) dans l'état fermé referme de façon étanche à l'air le boîtier (1) par un joint d'étanchéité.

12. Utilisation du dispositif d'emballage selon l'une des revendications précédentes pour l'emballage sans contamination de produits (50) dans des sacs tubulaires (55) du fait que
- le produit à emballer (50) est fini dans un isolateur rattaché (52) ou dans une hotte à flux laminaire (53),
- pour être jeté par l'opérateur depuis l'intérieur de l'isolateur (52) ou de la hotte à flux laminaire (53) dans une extrémité fermée du tuyau (51) dans le tube de passage (2) du dispositif incliné en particulier en oblique vers le bas,
- l'extrémité fermée avant du tuyau (51) pourvu du produit (50) situé dans celui-ci est extraite hors de l'ouverture de sortie du dispositif d'emballage et elle est posée dans un appareil de soudage (56), et
- le tuyau (51) est scellé de façon étanche par une soudure transversale (56) en aval du produit (50), et le sac tubulaire (55) fermé de façon étanche est le cas échéant séparé du tuyau (50),
- dans le cas d'un isolateur (52) monté en amont, le recouvrement de cassette est posée de façon étanche contre la partie fixe (2a) du tube de passage (2), en particulier avec la bague frontale (6), et l'espace intérieur du dispositif d'emballage (1) est constamment purgé, l'air aspiré dans l'espace intérieur étant filtré,
- dans le cas d'une hotte à flux laminaire (53) agencée en amont, l'espace intérieur du dispositif d'emballage (1) est maintenu en communication fluidique avec l'espace intérieur de la hotte à flux laminaire (53),
**caractérisée en ce que**
pour remplir la cassette à tuyau (3), on ouvre le couvercle du boîtier et on enlève le cas échant le joint d'étanchéité de cassette et ensuite on pousse le tuyau plié (51) par-dessous la douille de renvoi (3a).

13. Kit de réalisation d'un dispositif d'emballage (1) selon l'une des revendications 1 à 11, comportant
- deux formes de conception du boîtier (1),
- un couvercle respectif (11) adapté,
- une cassette à tuyau (3) comportant une douille de renvoi (3a),
- un recouvrement de cassette.

14. Kit selon la revendication 13,
**caractérisé en ce que**
l'ensemble comprend une partie ferme (2a) d'un tube de passage (2).
